# EUROPEAN PATENT SPECIFICATION

(11) **EP 1 839 838 B1**
(45) Date of publication and mention of the grant of the patent: **24.11.2010**
(21) Application number: 07006044.7
(22) Date of filing: 23.03.2007
(51) Int. Cl.: B29C 45/40

(54) **Ejecting apparatus for an injection molding machine**
Auswurfvorrichtung für eine Spritzgiessmaschine
Dispositif d'éjection pour une presse à injecter

(30) Priority: 27.03.2006 IT VA20060015
(43) Date of publication of application: 03.10.2007
(73) Proprietor: Tecnostampi S.r.l., 21040 Gornate Olona VA (IT)
(72) Inventor: Conte, Dino, 21040 Gornate Olona (VA) (IT)
(74) Representative: Colombo, Stefano Paolo

(56) References cited:
- EP-A- 1 407 869
- EP-A- 1 588 823
- DE-A1- 10 048 894
- US-A1- 2005 280 188

## Description

The present invention relates to the sector of manufacturing plastic parts by means of injection-moulding. In particular, the present invention relates to an improved apparatus for the injection-moulding of plastic parts.

For the purposes of the present invention, the term "part" comprises any object, of any shape and any size, which may be made of plastic by means of an injection-moulding process. In particular (but this not being intended to limit in any way the meaning of the term), the term "part" used in the present description and in the claims refers to a vehicle component, for example a bumper fender, a bumper cross-piece, a dashboard or the like.

For the purpose of the present patent application, the terms "plastic" or "plastic material" are understood primarily as meaning a material other than metal and in particular is understood as meaning a substantially thermoplastic material with elongation at break values ≥ 50% (during tensile tests on test pieces at 5 mm/min.) such as polycarbonate, polyester, polybutylene terephthalate, polypropylene, polyamide and derivatives thereof, EPDM-reinforced polypropylene or the like and any combination thereof. By way of a specific example, a plastic material which is particularly suitable for being moulded in order to produce vehicle parts is XENOY® PC/PBT which is marketed by GE Plastics. This material is already known in the motor car industry and ensures optimum resistance to petrol as well as a high resistance to impacts - also at low temperatures - and durability over time.

A known apparatus for the injection-moulding of plastic parts comprises two main components: one component called "cavity" and another component called "core". Moulding of the desired part is performed by joining under pressure the cavity with the core, all of which preceded by injection of liquefied plastic. In the apparatus for the injection-moulding of plastic parts an ejection zone which is situated in the bottom part of the core, between the core and the back plate, is defined. An ejection plate and a set of oil-hydraulic pistons are situated in this ejection zone. The set of oil-hydraulic pistons is able to raise the ejection plate in the direction of the cavity or bring it back into the starting position.

The body of the oil-hydraulic pistons is fixed to the back plate. Typically, the stem of the oil-hydraulic pistons is fixed, by means of tie-rods, to the ejection plate. Actuation of the oil-hydraulic pistons causes the movement of the ejection plate.

A known set of oil-hydraulic pistons for an apparatus for the injection-moulding of plastic parts comprises four oil-hydraulic pistons which are arranged in a symmetrical configuration. Each oil-hydraulic piston operates in the region of a respective lug projecting from the ejection plate. In other words, the ejection plate of the known apparatus has a substantially rectangular shape, but projecting parts are formed on the long sides, substantially in the vicinity of the corners. Two rigid rods connected together by means of a connecting plate are fixed precisely to each of these projecting parts. The top end of the stem of a piston is also fixed to the connecting plate. When the stems of the pistons are extracted, the rigid rods cause the ejection plate to move correspondingly.

A known set of oil-hydraulic pistons of the abovementioned type is illustrated, for example, in the patent US 5,869,112.

EP 1,588,823 A (Laepple August GmbH & Co.) discloses a device for the manufacture of injection-moulded parts.

EP 1,407,869 A (Liteco Srl) discloses a modular system for moulds of injection-moulding machines in accordance with the preamble of claim 1.

DE 100 48 894 A1 (Sumitomo Chemical Co.,Ltd) discloses a clamp device for an injection-moulding machine.

US 2005/0280188 (Cecchin Euclide et al.) discloses a core block split into common parts.

A known apparatus for the injection-moulding of plastic parts with the above-described set of four oil-hydraulic pistons is normally efficient and allows the production of moulded parts with a high degree of precision.

However, the Applicant has perceived the need to improve the above-described apparatus and in particular improve the set of oil-hydraulic pistons which move the ejection plate of these known apparatus. Even more particularly, the Applicant has perceived the need to reduce the complexity and the costs associated with the set of oil-hydraulic pistons, while leaving their performance unchanged.

Another problem of the known set of oil-hydraulic pistons is that of the synchronization of the oil-hydraulic pistons. In fact, in order for the apparatus to produce parts with the required precision, it is necessary for the movement of the four oil-hydraulic pistons to be perfectly synchronized.

Surprisingly, the Applicant has found that the abovementioned problems are solved with an apparatus for the injection-moulding of plastic parts in which there are only two oil-hydraulic pistons fixed to the back plate and to the ejection plate along the short sides of the latter and in such a way that the oil-hydraulic pistons are situated within the mould. According to another embodiment, only one central oil-hydraulic piston can also be provided.

According to the invention, the number of oil-hydraulic pistons is reduced from four to two or, in case, also to one. They are positioned within the mould, or more precisely within the mould profile. Owing to this arrangement, the projecting parts or "lugs" of the ejection plate are eliminated.

Moreover, each side of the apparatus is now formed as one piece (side with one gib) and no longer as three parts (side with three gibs) as in the known apparatus. This, in turn, results in considerable advantages in terms of cost savings, robustness and reliability during use of the apparatus. It is in fact known that one of the problems associated with the use of the known apparatus consists in the "outside" positioning of the oil-hydraulic pistons. The pistons (and in particular the electronic circuits associated with them) are, for this reason, very vulnerable to knocks both during transportation and during use. The invention is defined by the features of claim 1.

According to the present invention, an apparatus for the manufacture of injection-moulded plastic parts is provided. The apparatus comprises: a back plate, a first and a second side fixed to the back plate, an ejection plate situated between the sides and a set of oil-hydraulic ejection pistons for moving the ejection plate with respect to the back plate. According to the invention, each of the sides is made as one piece (single gib). Moreover, the set of oil-hydraulic ejection pistons consists of a single central oil-hydraulic piston or, alternatively, of a first oil-hydraulic piston and a second oil-hydraulic piston. The single central oil-hydraulic piston or the first and the second oil-hydraulic piston are positioned within the mould profile.

According to an advantageous embodiment, the first and the second oil-hydraulic piston are situated along a middle longitudinal plane of the apparatus.

Typically, the ejection plate has a rectangular shape in plan view. Advantageously, the tie-rods of the first and of the second oil-hydraulic piston are fixed to the ejection plate in areas which are within the rectangular shape of the said ejection plate.

Even more advantageously, the body of the first and of the second oil-hydraulic piston does not project from the profile of the mould. In this case, there are two holes or two cavities open towards the short side of the said ejection plate for receiving the body of the first and of the second oil-hydraulic piston.

The oil-hydraulic pistons are fixed to the face of the back plate which faces the ejection plate. Alternatively, the oil-hydraulic pistons are partially inset in the thickness of the back plate and project only from the face of the back plate which faces said ejection plate.

The invention will be described in detail hereinbelow with reference to the accompanying sheets of drawings in which:
- Figure 1 shows part of a known moulding apparatus;
- Figure 2 shows part of a moulding apparatus according to a first embodiment of the present invention;
- Figure 3 is a part of a longitudinal section through a moulding apparatus according to a first embodiment of the present invention;
- Figure 4 is a top plan view of the moulding apparatus according to Figure 2;
- Figure 5 shows part of a moulding apparatus according to a second embodiment of the present invention;
- Figure 6 is a part of a longitudinal section of a moulding apparatus according to a second embodiment of the present invention;
- Figure 7 is a top plan view of the moulding apparatus according to Figure 5;
- Figure 8 shows part of a moulding apparatus according to a third embodiment of the present invention;
- Figure 9 is a part of a longitudinal section of a moulding apparatus according to the third embodiment of the present invention; and
- Figure 10 is a top plan view of the moulding apparatus according to Figure 8.

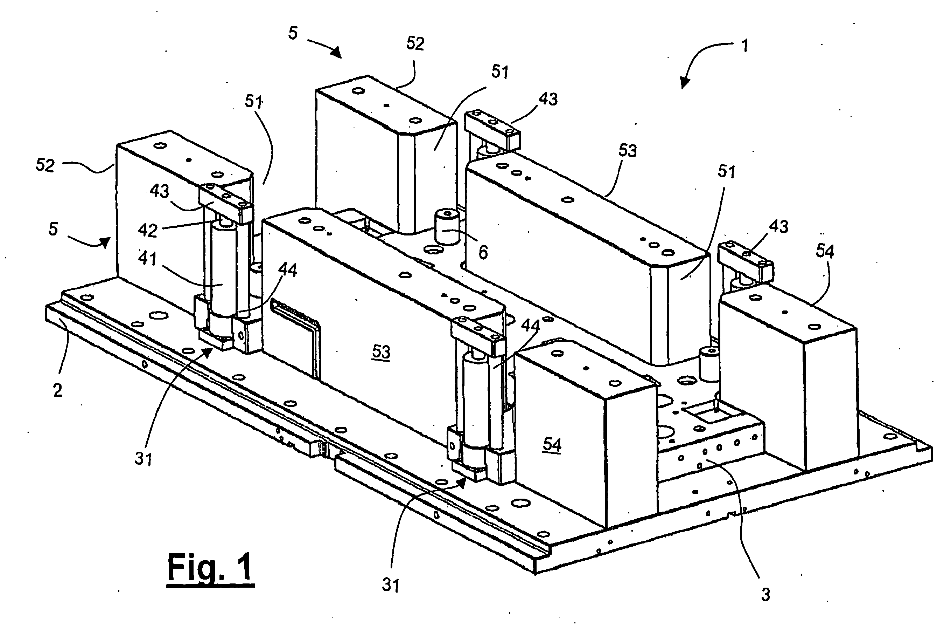

Figure 1 shows some parts of a known moulding apparatus 1. In particular, the figure shows a back plate 2, an ejection plate 3, four oil-hydraulic pistons 4 for raising the ejection plate 3 and two sides 5. For the sake of simplicity, other parts of the apparatus 1, such as the core frame, core and cavity, have not been shown.

The back plate 2 is flat and has a rectangular shape. The four oil-hydraulic pistons 4 and two sides 5 are fixed to it. Each side 5 is formed by three parts or gibs. The total number of gibs is therefore six. Spacers 6, typically with a circular cross-section, are also fixed to the back plate 2. The oil-hydraulic pistons 4, the sides 5 and the spacers 6 all extend perpendicularly with respect to the back plate 2 from a same side thereof.

The ejection plate 3 has a rectangular shape, but has four lugs 31 projecting from its two long sides. Basically, the ejection plate 3 of the known apparatus 1 has the form of a double cross, where the arms of the double cross consist of the projecting lugs 31.

Two openings 51 are formed along each of the sides 5, between the gibs. Expressed in other words, each side 5 consists of three parts (52, 53, 54). Each opening 51 along the sides is wide enough for allowing the lugs 31 of the ejection plate 3 to pass through.

The body 41 of each piston 4 is fixed to the back plate 2 in the vicinity of a respective opening 51. The end of the stem 42 of each piston 4 is fixed to a bridge-like connecting element 43. In turn, each bridge-like connecting element 43 is fixed to a pair of rods 44. The other end of the rods 44 is fixed to the ejection plate 3 in the region of the projecting lugs 31.

As mentioned above in the introduction, by pumping fluid into the oil-hydraulic pistons 4, the stem 42 moves outwards from the body 41 of the piston and the ejection plate 3 is separated from the back plate 2.

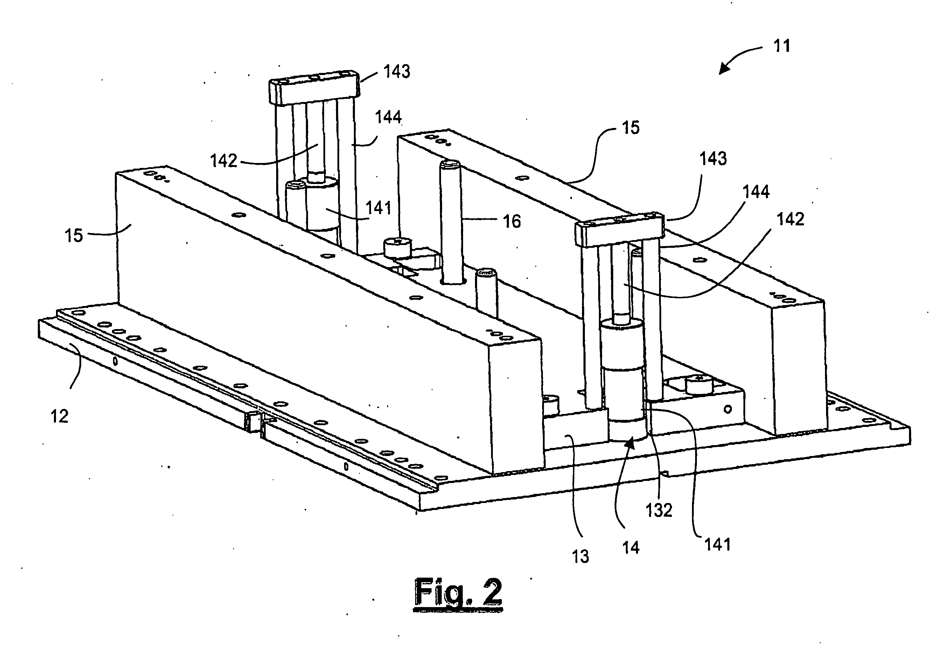

In a similar manner to Figure 1, Figure 2 shows some parts of a moulding apparatus 11 according to a first embodiment of the present invention. In particular, this figure shows a back plate 12, an ejection plate 13, two oil-hydraulic pistons 14 for raising the ejection plate 13 and two sides 15 (single gib). For the sake of simplicity, in this case also, other parts of the apparatus 11, such as the core frame, core and cavity, have not been shown.

The back plate 12 is substantially flat and has a rectangular shape. The two oil-hydraulic pistons 14 and the two sides 15 are fixed thereto (one gib per side). Spacers 16, which typically have a circular cross-section, are also fixed to the back plate 12.

It can be immediately seen that the oil-hydraulic pistons 14 able to raise the ejection plate 13 are positioned, opposite each other, along the shorter sides of the ejection plate 13. Preferably, they are situated in the centre of the short sides of the ejection plate 3. In other words, they are positioned along a longitudinal axis of the apparatus 11 within the mould.

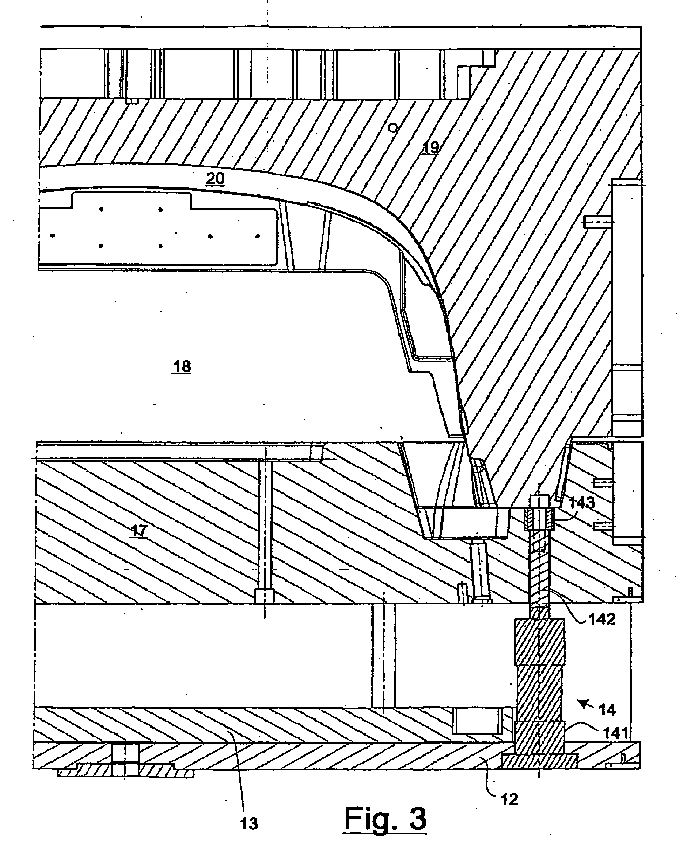

The two oil-hydraulic pistons 14 are fixed to the back plate in any suitable manner, for example using fixing means of the threaded type or by means of welding. Conveniently, the two oil-hydraulic pistons are fixed to the back plate by means of fixing screws. Said pistons may be fixed to the side of the back plate 2 which faces the ejection plate 3 or may be inset (as shown in the cross-section of Figure 3) in the thickness of the back plate 12.

According to an advantageous embodiment, two recesses 132 are formed along the short sides of the ejection plate. Each recess 132 has a size and shape at least the same as that of the body 141 of the piston 14.

The stem 142 of each piston 14 is fixed to a bridge-like connecting element 143. The bridge-like connecting element 143, in turn is fixed to two rods 144. The rods 144 are connected, at their opposite end, to the ejection plate 13.

When fluid is pumped inside the two oil-hydraulic pistons 14, the stems 142 move outwards and, owing to the mechanism consisting of rods 144 and bridge-like connecting element 143, move the ejection plate 13 away from the back plate 12.

Advantageously, compared to the known apparatus shown in Figure 1, the ejection plate 3 of the apparatus according to the first embodiment of the present invention is substantially rectangular and does not require special machining which is instead required to form the projecting lugs 131. These machining operations are obviously costly.

Advantageously, compared to the known apparatus shown in Figure 1, each side 15 consists of one piece and therefore, in this case also, costly machining is not required in order to form the three parts (gibs) which are typical of the known apparatus.

Advantageously, the entire apparatus 11 according to the first embodiment is more enclosed and protected by the continuous sides 15. In particular, the two oil-hydraulic pistons 14 are situated within the mould profile.

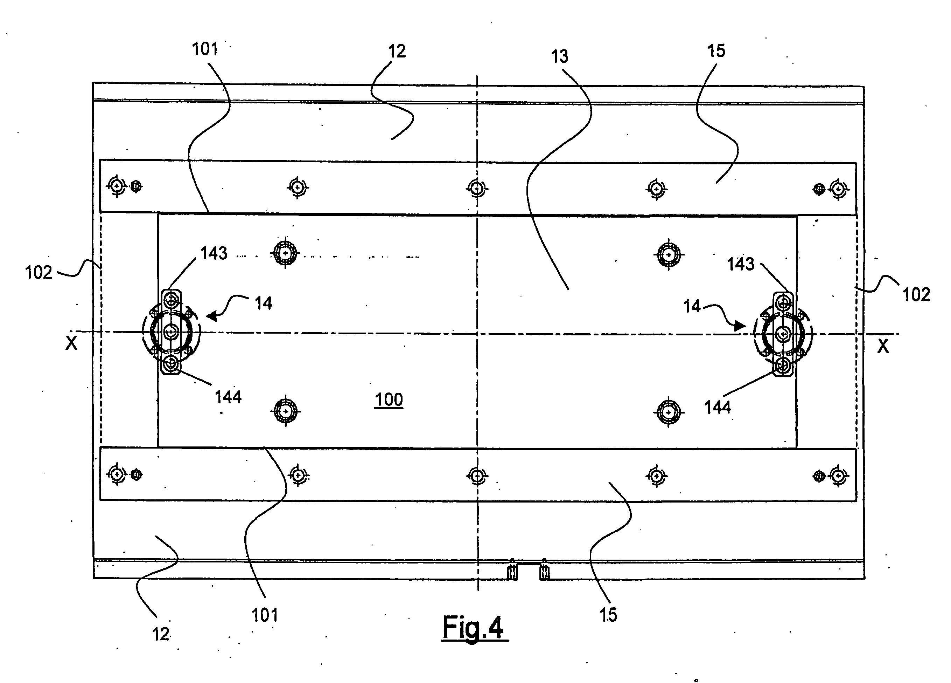

For the purposes of the present invention it is understood that the two oil-hydraulic pistons 14 are situated within the mould profile when, in a plan view of the apparatus, the two oil-hydraulic pistons (which are fixed to the back plate) are situated within a rectangle 100 having, as the long side, the inner edge 101 of the gibs 15 and, as the short side, a segment 102 which connects the ends of the inner edges 101 of the gibs 15. This concept is schematically shown in Figure 4.

As mentioned above (and as schematically shown in Figure 4), the ejection plate 13 has a substantially rectangular shape in plan view. In particular, it can be understood that the two oil-hydraulic pistons 14 are situated within the mould profile when, in a plan view of the apparatus, the tie-rods 144 of the two oil-hydraulic pistons 14 are fixed to the ejection plate 13 in areas which are within the rectangular shape of the ejection plate.

For the purposes of the present invention, the middle longitudinal plane X-X of the apparatus 1 is that plane which is perpendicular to the back plate, parallel to the gibs, and situated equidistant from the said gibs. In Figure 4 the line indicating said axis is shown.

Figure 3 shows a part of a longitudinal section, in the region of the oil-hydraulic pistons 14, through an apparatus 11 according to a first embodiment of the present invention.

Figure 3 shows, in relation to the first embodiment, the back plate 12, the ejection plate 13, the core frame 17, the core 18 and the cavity 19 which define between them the mould cavity 20. A piston 14 with the body 141, the stem 142 and the connecting element 143 to which the rods 144 are fixed (not visible in Figure 3) is also shown cross-sectioned.

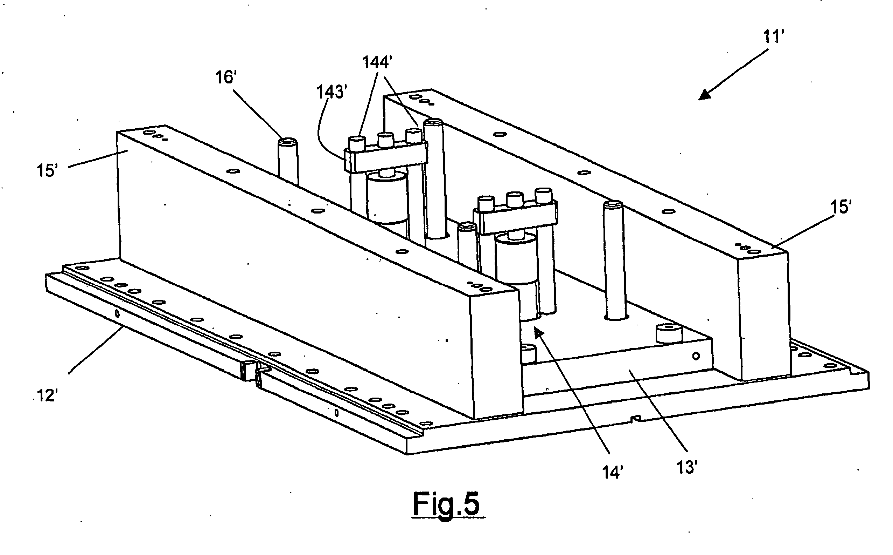

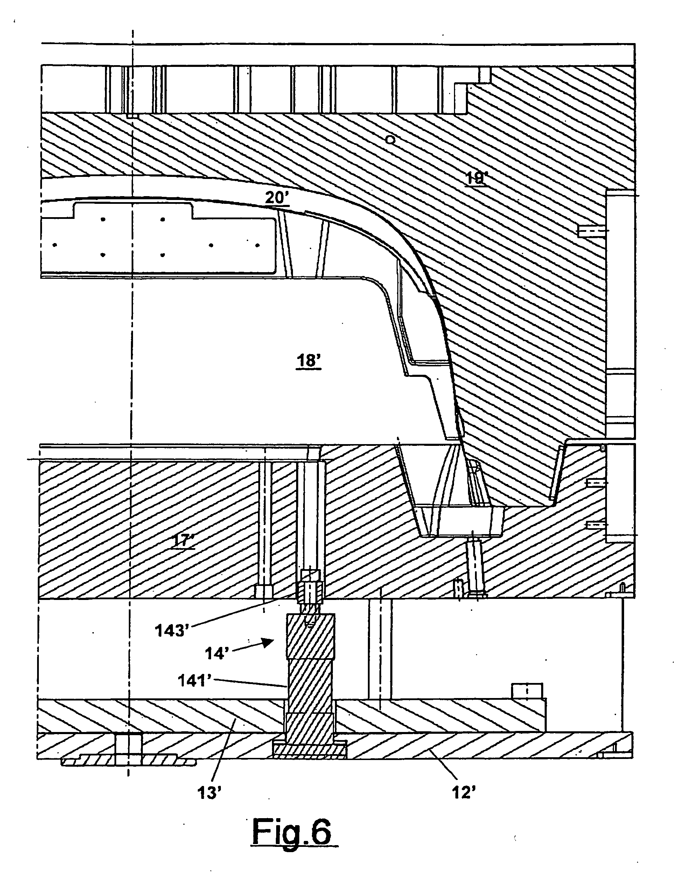

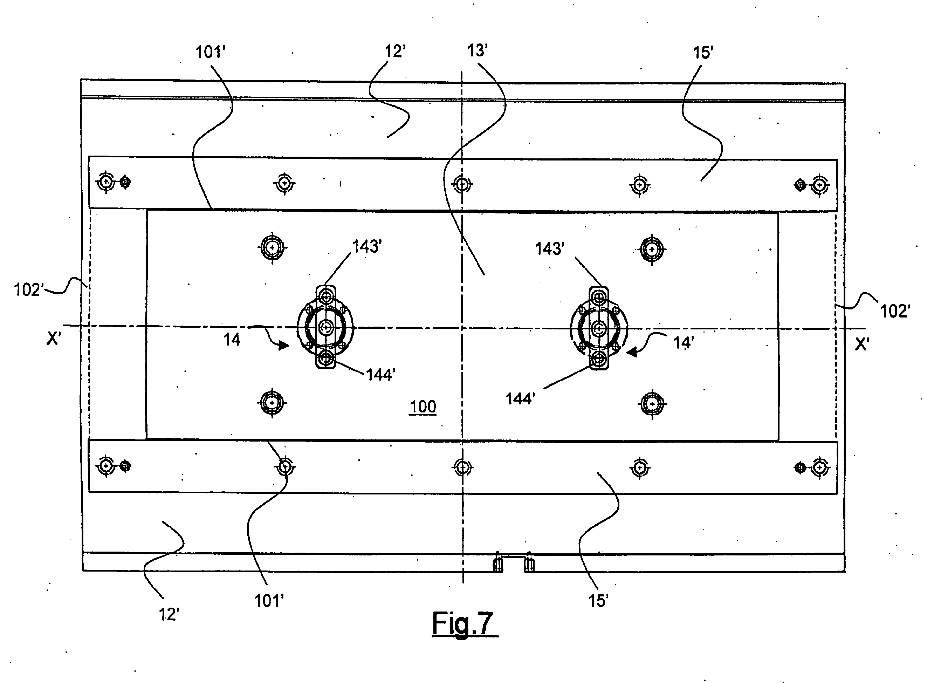

Figures 5, 6 and 7 show a second embodiment of the present invention. The same parts have been indicated with the same reference numbers except followed by an apostrophe. The only substantial difference between the apparatus 11 according to the first embodiment and the apparatus 11' according to the second embodiment is in the position of the two oil-hydraulic pistons 14'. In fact, in the apparatus 11' the two oil-hydraulic pistons 14' are no longer positioned along two outer edges of the ejection plate, but are positioned more internally within the said ejection plate 13'. According to this second embodiment, the ejection plate 13' does not have the two recesses 132. In the ejection plate two holes are made within which the bodies of the two oil-hydraulic pistons 14' are introduced.

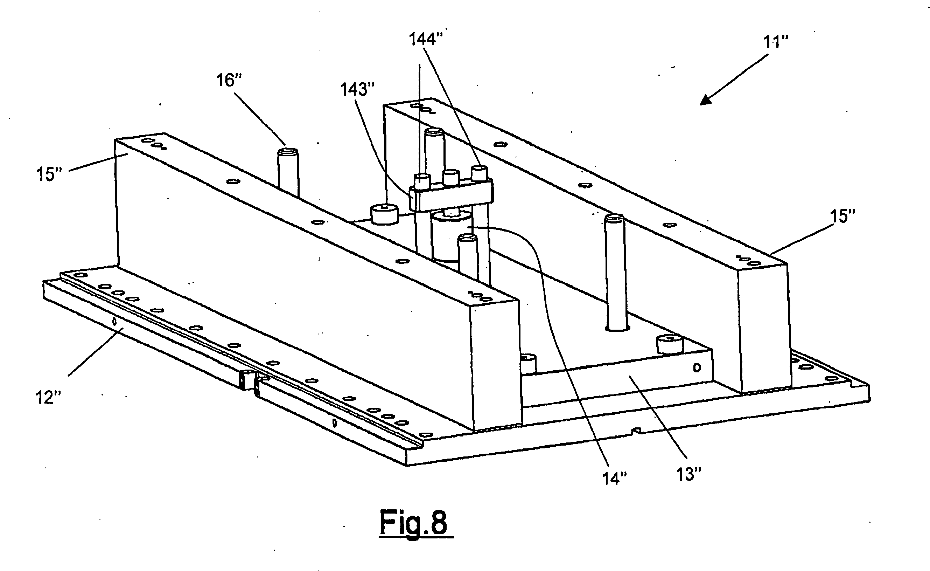

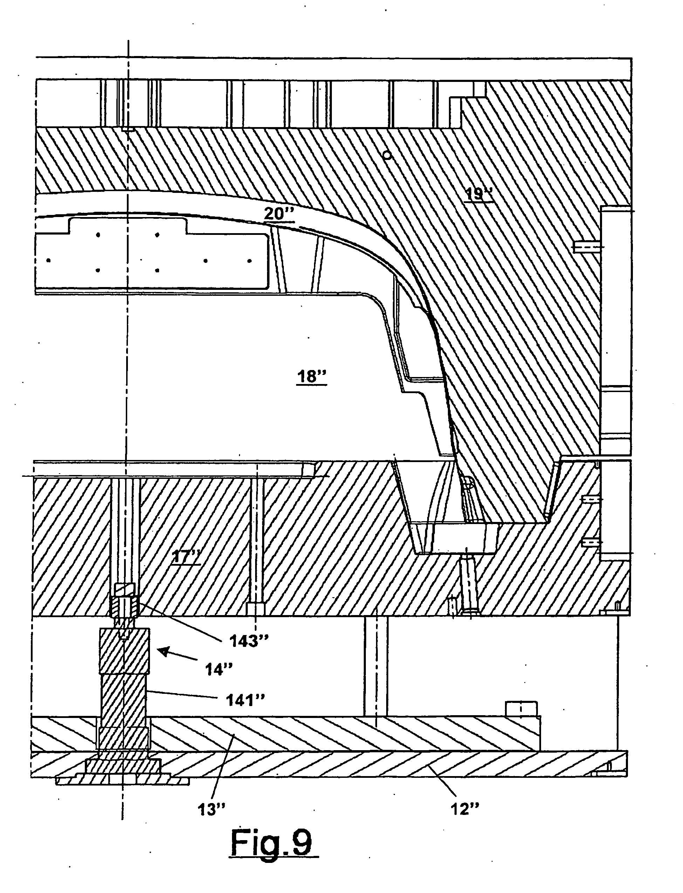

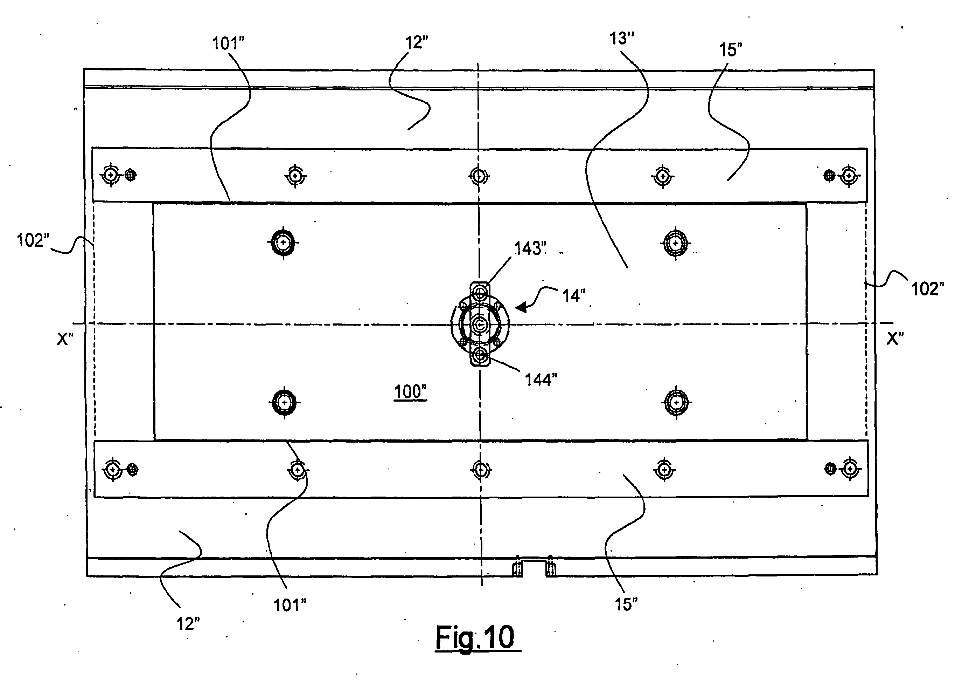

Figures 8, 9 and 10 show a third embodiment of the present invention. The same parts have been indicated with the same reference numbers except followed by a double apostrophe. Unlike the apparatus 11 and 11' according to the first and the second embodiment, the apparatus 11" comprises only one oil-hydraulic piston 14" which is positioned substantially in the middle of the mould. In the ejection plate 13" there is only one central hole within which the body of the oil-hydraulic piston 14" is introduced. Of course, the size of the single oil-hydraulic piston 14" is such as to be able to exert a pressure equal to that exerted by the two oil-hydraulic pistons 14 and 14".

## Claims

1. Apparatus (11) for the manufacture of injection-moulded plastic parts, comprising: a back plate (12), a first side (15) and a second side (15) which are fixed to said back plate (12), an ejection plate (13) situated between said sides (15) and a set of ejection pistons (14) for moving said ejection plate (13) with respect to said back plate (12) from the same side thereof, wherein each of the sides (15) consists of a single piece gib (15), wherein said set of ejection pistons consists of a single central piston (14") or, alternatively, of a first piston (14, 14') and a second piston (14, 14'), wherein the single central piston (14") or the first and the second piston (14, 14") are situated within a mould profile, wherein said mould profile is defined, in a plan view of the apparatus, as a rectangle (100) having, as long sides, inner edges (101) of the gibs (15) and, as short sides, segments (102) which connect the respective ends of the inner edges (101) of the gibs (15), **characterized in that** said single piston (14") or said first and second pistons (14, 14') are either fixed to the face of the back plate (12, 12', 12") which faces the ejection plate (13, 13', 13") or are partially inset in the thickness of the back plate (12) and project only from the face of the back plate (12, 12', 12") which faces said ejection plate (13, 13', 13"), wherein the body of said single central piston (14") or, alternatively, the bodies of said first piston (14, 14') and of said second piston (14, 14'), extend perpendicularly to said back plate (12) in the same direction as said single piece gibs (15).

2. Apparatus according to Claim 1, **characterized in that** said first piston (14, 14') and said second piston (14, 14') are situated along a middle longitudinal plane (X-X) of the apparatus (1).

3. Apparatus according to Claim 1 or 2, **characterized in that** said ejection plate (13, 13') has a rectangular shape in plan view and **in that** the tie-rods (144, 144') of the two oil-hydraulic pistons (14, 14') are fixed to the ejection plate (13, 13') in areas which are within the rectangular shape of the ejection plate.

4. Apparatus according to Claim 3, **characterized in that** the ejection plate (13) comprises two cavities (132) open towards the short side of the said ejection plate for receiving the body of the first and of the second piston (14).

## Patentansprüche

1. Vorrichtung (11) zum Herstellen von Spritzgußplastikteilen, umfassend: eine Rückenplatte (12), ein erstes Seiteteil (15) und ein zweites Seitenteil (15), welche an der Rückenplatte (12) befestigt sind, eine Auswurfplatte (13), die zwischen den Seiten (15) angeordnet ist, und einen Satz von Auswurfkolben (14), um die Auswurfplatte (13) bezüglich der Rückenplatte (12) von derselben Seite aus zu bewegen, wobei jede der beiden Seitenteile (15) aus einer einteiligen Leiste (15) bestehen, wobei der Satz Auswurfkolben aus einem einzelnen zentralen Kolben (14") besteht oder, alternativ, aus einem ersten Kolben (14, 14') und einem zweiten Kolben (14, 14'), wobei der einzelne zentrale Kolben (14") oder der erste und der zweite Kolben (14, 14') innerhalb eines Formprofils angeordnet sind, wobei das Formprofil in einer Draufsicht auf die Vorrichtung als ein Rechteck (100) definiert ist, das als lange Seiten die inneren Kanten (101) der Leisten (15) und als kürzere Seiten Segmente (102) aufweist, welche die entsprechenden Enden der inneren Kanten (101) der Leisten (15) verbinden, **dadurch gekennzeichnet, dass** der einzelne Kolben (14") oder der erste und der zweite Kolben (14, 14') entweder an der Fläche der Rückenplatte (12, 12', 12"), welche der Auswurfplatte (13, 13', 13") gegenüber liegt, befestigt sind oder teilweise in die Dicke der Rückenplatte (12) eingesetzt sind und nur aus der Fläche der Rückenplatte (12, 12', 12"), welche der Auswurfplatte (13, 13', 13") gegenüberliegt, herausstehen, wobei der Körper des einzelnen zentralen Kolbens (14") oder, alternativ, die Körper des ersten Kolbens (14, 14') und des zweiten Kolbens (14, 14') sich senkrecht bis zu der Rückenplatte (12) in dieselbe Richtung wie die einteiligen Leisten (15) erstrecken.

2. Vorrichtung gemäß Anspruch 1, **dadurch gekennzeichnet, dass** der erste Kolben (14, 14') und der zweite Kolben (14, 14') entlang einer mittleren Längsebene (X-X) der Vorrichtung (1) angeordnet sind.

3. Vorrichtung gemäß Anspruch 1 oder 2, **dadurch gekennzeichnet, dass** die Auswurfplatte (13, 13') in der Draufsicht eine rechteckige Form hat und dass die Zuganker (144, 144') der zwei ölhydraulischen Kolben (14, 14') an der Auswurfplatte (13, 13') in Bereichen befestigt sind, welche sich innerhalb der rechteckigen Form der Auswurfplatte befinden.

4. Vorrichtung gemäß Anspruch 3, **dadurch gekennzeichnet, dass** die Auswurfplatte (13) zwei Hohlräume (132) umfasst, die in Richtung der kurzen Seite der Auswurfplatte offen sind, um den Körper des ersten und des zweiten Kolbens (14) aufzunehmen.

## Revendications

1. Appareil (11) pour la fabrication de pièces en plastique moulées par injection, comprenant un sommier (12), un premier côté (15) et un deuxième côté (15) qui sont fixés sur ledit sommier (12), une plaque d'éjection (13) située entre lesdits côtés (15) et un ensemble de pistons d'éjection (14) pour déplacer ladite plaque d'éjection (13) par rapport audit sommier (12) à partir du même côté de ce dernier, dans lequel chacun des côtés (15) se compose d'une seule cale de pièce (15), dans lequel ledit ensemble de pistons d'éjection se compose d'un seul piston central (14") ou en variante, d'un premier piston (14, 14') et d'un deuxième piston (14, 14'), dans lequel l'unique piston central (14") ou les premier et deuxième pistons (14, 14") sont positionnés à l'intérieur d'un profil de moule, dans lequel ledit profil de moule est défini, sur une vue en plan de l'appareil, sous la forme d'un rectangle (100) ayant, en tant que longs côtés, des bords internes (101) des cales (15) et, en tant que côtés courts, des segments (102) qui raccordent les extrémités respectives des bords internes (101) des cales (15), **caractérisé en ce que** ledit piston unique (14") ou lesdits premier et deuxième pistons (14, 14') sont fixés sur la face du sommier (12, 12', 12") qui fait face à la plaque d'éjection (13, 13', 13") ou sont partiellement insérés dans l'épaisseur du sommier (12) et font uniquement saillie à partir de la face du sommier (12, 12', 12") qui fait face à ladite plaque d'éjection (13, 13', 13"), dans lequel le corps dudit piston central unique (14") ou en variante, les corps dudit premier piston (14, 14') et dudit deuxième piston (14, 14') s'étendent perpendiculairement audit sommier (12) dans la même direction que lesdites cales de pièce uniques (15).

2. Appareil selon la revendication 1, **caractérisé en ce que** ledit premier piston (14, 14') et ledit deuxième piston (14, 14') sont situés le long d'un plan longitudinal central (X-X) de l'appareil (1).

3. Appareil selon la revendication 1 ou 2, **caractérisé en ce que** ladite plaque d'éjection (13, 13') a une forme rectangulaire sur une vue en plan et **en ce que** les tirants (144, 144') des deux pistons hydrauliques à huile (14, 14') sont fixés sur la plaque d'éjection (13, 13') dans des zones qui sont à l'intérieur de la forme rectangulaire de la plaque d'éjection.

4. Appareil selon la revendication 3, **caractérisé en ce que** la plaque d'éjection (13) comprend deux cavités (132) ouvertes vers le côté court de ladite plaque d'éjection pour recevoir le corps du premier et du deuxième piston (14).
